# EUROPEAN PATENT APPLICATION

(11) **EP 1 067 816 A1**
(43) Date of publication of application: **10.01.2001**
(21) Application number: 99440186.7
(22) Date of filing: 09.07.1999
(51) Int. Cl.: H04Q 7/38

(54) **Base station of a CDMA radiocommunication network and radio terminal for communicating therewith**

(71) Applicant: ALCATEL, 75008 Paris (FR)
(72) Inventor: De Hoz Garcia-Bellido, Alejandro, 92100 Boulogne-Billancourt (FR); Bourgoin, Cédric, 75015 Paris (FR); Cordier, Christophe, 75017 Paris (FR)
(74) Representative: Scheer, Luc

(57) **Abstract**

The present invention concerns in particular a fixed station of a radiocommunication network, this fixed station comprising means for sending a broadcast channel at a constant power level, called first broadcast channel, and means for sending a second broadcast channel at a power level depending on the uplink load status of this fixed station.

## Description

The present invention relates to cellular radiocommunications and, in particular, to diversity communication with a mobile radio terminal. In particular, the invention concerns a fixed station of a radiocommunication network, this fixed station comprising means for sending a broadcast channel at a constant power level.

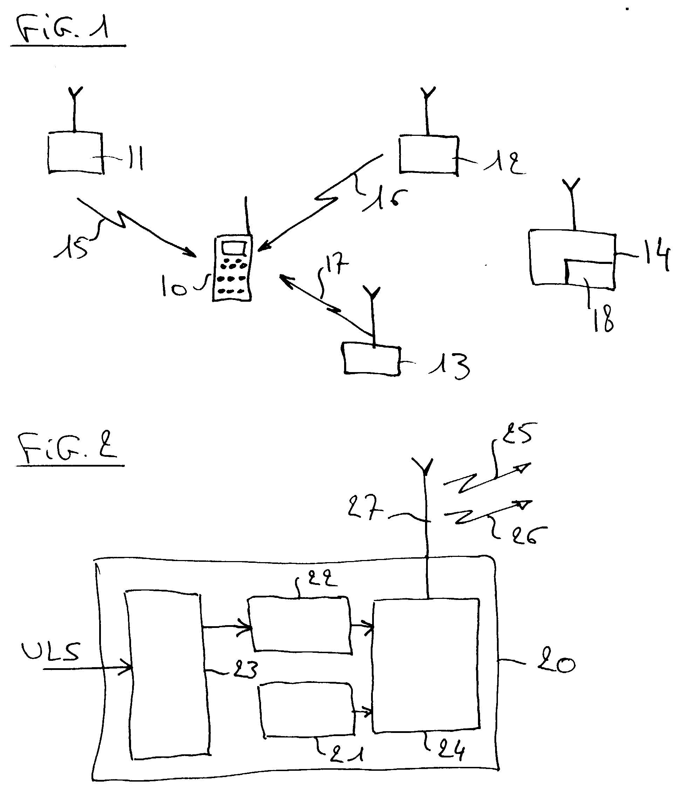

Figure 1 shows a typical CDMA cellular radiocommunication network.

Three fixed stations 11, 12, 13 are represented, these fixed stations being controlled by a Radio Network Controller (RNC) 14. Such a fixed station 11, 12, 13 is called Node B in a CDMA system, according to UMTS standard. A radio terminal 10, for example a mobile terminal, is present in the network.

Because of CDMA principles, any FDD-CDMA system has to assure the possibility that the mobile terminal 10 communicates with more than one fixed station 11, 12, 13 simultaneously. This situation, called soft handover or diversity communication, regards a high percentage of mobiles in the network, and therefore its functioning is very critical. A higher than optimal percentage will cause a waste of resources in the system, and a lower than optimal percentage will have an impact both on the stability of the global system and on the quality of certain communications individually. The optimal percentage will be reached when the procedures in charge of triggering on and off these soft handover situations are optimized. Those procedures will have to know how to select the adequate fixed stations with which each mobile terminal has to communicate, and at which moment introduce changes in that set of said fixed stations. The global objective is that the soft handover procedure selects at any time the set of fixed stations for each mobile terminal that minimizes the interference generated in the network, while assuring the required quality for each connection.

The most well known solution to this problem is the use of a constant power downlink (fixed station to mobile 10) broadcast channel per fixed station 11, 12, 13, to allow each mobile terminal 10 to select a set of fixed stations 11, 12, 13 to communicate with, based on measurements performed over said broadcast channels. These broadcast channels are referenced 15, 16 and 17 on Fig. 1.

Either the power level or the Eb/lo level of each of the broadcast channels 15, 16, 17 is measured at the mobile terminal 10, and the best values are retained, according to a set of thresholds and offsets. Those retained values determine the fixed stations 11, 12, 13 with which the mobile terminal 10 will communicate.

This solution is basically a downlink based soft handover criterion. The measurements performed over the broadcast channels 15, 16, 17 are an indicator of the quality of the downlink from each fixed station 11, 12, 13 toward the mobile terminal 10. Thus, the terminal 10 can select the base stations that have good downlink paths to communicate with, this minimizing the overall downlink power (power of the signals sent by the base stations). The selection of the fixed stations consists in registering these fixed stations in the so-called "active set" of the terminal. However, in a FDD system, the uplink path does not have the same propagation characteristics as the downlink path. Thus, it is not possible to select, at the level of the radio terminal, the base station of the network that requires the less transmission power from the radio terminal.

Therefore, this solution does not cover the whole problem.

The aim of the present invention is to provide a new radiocommunication system in which not only the qualities of the downlink paths are taken in account for determining with which fixed station the radio terminal will communicate, but also the qualities of the uplink paths.

This is achieved with a fixed station according to claim 1 and with a radio terminal according to claim 3.

The use, at the level of each fixed station, of a second broadcast channel which transmit power level is function of the uplink load status permits to monitor, at the level of the radio terminal, with which fixed station this terminal can communicate with the lowest transmit power. This permits to select the fixed station(s) requiring the lowest transmit power from the terminal. The main advantage is that this lowers the uplink interference level and increases the battery life of the terminal.

In the following, the invention will be described in greater detail with reference to the examples of the accompanying drawings, in which:
- Figure 1 represents a typical CDMA cellular radiocommunication network;
- Figure 2 schematically represents a fixed station according to the present invention;
- Figure 3 schematically represents a radio terminal according to the present invention.

Figure 1 has been described in reference to the prior art.

The basic idea of the invention relies on the performance of measurements over two independent broadcast channels transmitted by each fixed station. Since both broadcast channels are independent, their power levels can be driven according to different criteria.

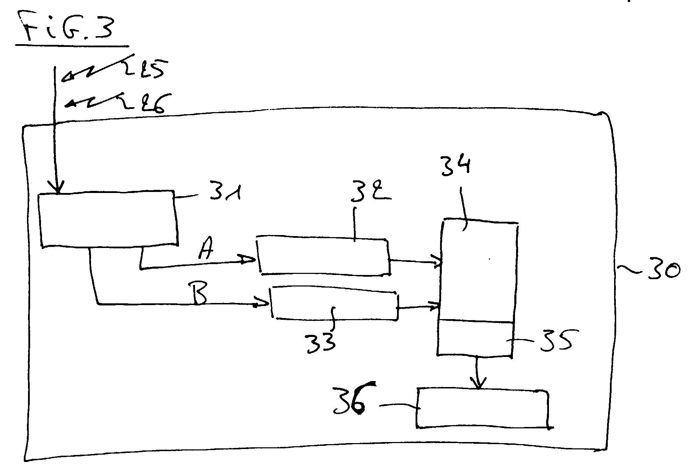

Figure 2 schematically represents a fixed station according to the present invention.

The represented fixed station 20, also called node B in a CDMA system according to the UMTS standard, classically comprises means 21 for sending a broadcast channel at a constant power level. This broadcast channel is hereinafter called first broadcast channel and represented by an arrow 25. According to the invention, the fixed station 20 also comprises means 22 for sending a second broadcast channel at a power level depending on the uplink load status of the fixed station 20. This second broadcast channel is represented by an arrow 26.

More precisely, the fixed station 20 comprises combining means 24 for combining the broadcast signals generated by the means 21 and 22, the combining means followed by an antenna 27. The power level at which the second broadcast channel 26 is sent is controlled by a control entity 23 receiving in input the uplink load status ULS of the fixed station 20. This uplink load status ULS is for example determined in the RNC to which base station 20 is connected. The ULS corresponds to the load of the base station 20. This load is directly related to the total power level received at the base station (addition of all signals).

Figure 3 schematically represents a radio terminal according to the present invention.

A radio terminal according to the present invention generally comprises processing means 31 to 34 providing, for each of the fixed stations sending the aforementioned broadcast channels, data related to reception quality levels of each of these broadcast channels. The processing means comprise demodulation means 31 providing, on a first path A, the signals received on the first broadcast channel, and, on a second path B, the signals received on the second broadcast channel. The signals coming from the different fixed stations are for example distinguishable through the use of different spreading sequences.

The data related to the reception quality levels are for example ratios corresponding to Eb/lo (Energy per bit divided by the overall interference power spectral density) measured on the broadcast channels, or power levels.

The demodulation means are followed by tables 32, 33 in which the fixed stations and the corresponding different data related to the reception quality levels are stored. These data are then loaded in another table 34 from which decisions means 35 select at least two fixed stations for communicating simultaneously with them. This selection consists in putting the references of selected fixed stations, that are comprised in the broadcast signals, in the active set 36 of the radio terminal 30.

In a preferred embodiment, the decision means 35 select at least:
- the fixed station for which the first broadcast channel is the best received by the terminal, and
- the fixed station for which the second broadcast channel shows the lowest uplink power budget.

This uplink power budget corresponds to the product of the uplink pathloss and of the required received power at the fixed station to obtain the decided quality which is directly related to uplink load of the fixed station. The uplink pathloss corresponds approximately to the downlink path loss or can be determined from the downlink pathloss, when the transmit and receive frequencies (FDD) are known. Thus, the fixed station for which the second broadcast channel shows the lowest uplink power budget corresponds to the fixed station for which the second broadcast channel is the best received by the terminal.

In a preferred embodiment, the power level at which the second broadcast channel 26 is sent is inversely proportional to the uplink load, i.e. this power level increases when the uplink load sinks.

The selection of the fixed station for which the first broadcast channel is the best received by the terminal permits to lower the downlink interference in the network (less power transmitted by the fixed station), and the selection of the fixed station for which the second broadcast channel shows the lowest uplink power budget permits to lower the uplink interference in the network (less power transmitted by the radio terminal).

Is is however clear that another selection algorithm can be implemented at the level of the radio terminal, for example based on an unbalanced criterion for uplink and downlink.

To summarize, according to the invention, a first broadcast channel is transmitted at a constant power level, this allowing mobile terminals to evaluate the status of the downlink from the corresponding fixed station by measuring the Eb/lo (or the power level) of the received first broadcast channel. Comparison on those measured Eb/lo values (or power levels) for all first broadcast channels of surrounding fixed stations will give a set of fixed stations with which the mobile could communicate in the downlink under good quality conditions. At the same time, a second broadcast channel is power controlled by the fixed stations, according to the power level computed at the RNC level by a given algorithm, in such a way that the power level of said second broadcast channel reflects the cell load at the corresponding fixed station. Each mobile terminal then measures on a periodic basis the received power of the second broadcast channel. After performing these measurements for all power modulated broadcast channels from all surrounding fixed stations, and by comparison of those measured power levels, each mobile terminal will determine which are the most suitable fixed stations to communicate with in the uplink.

An algorithm at the mobile terminal will generate a final set of fixed stations composed of fixed stations present in one or both of previously generated sets by the two described methods, according to given priority parameters, thresholds and offsets.

The invention also concerns an RNC communicating with fixed stations of a radiocommunication network, this RNC comprising processing means (referenced 18 in Fig.1) for determining the power of the second broadcasted channels broadcast by the fixed stations it controls, in function of the uplink power budget of each corresponding fixed stations.

The main advantage of the solution proposed by the invention is that it allows a precise mechanism to determine the set of fixed stations with which a mobile should communicate, by taking into account the characteristics of the uplink as well as the downlink.

## Claims

1. Fixed station (11, 12, 13, 20) of a radiocommunication network, said fixed station (11, 12, 13, 20) comprising means (21) for sending a broadcast channel (25) at a constant power level, called first broadcast channel (25), wherein said fixed station (11, 12, 13, 20) also comprises means (22) for sending a second broadcast channel (26) at a power level depending on the uplink load status of said fixed station (11, 12, 13, 20).

2. Fixed station according to claim 1, wherein said fixed station (11, 12, 13, 20) belongs to a CDMA radiocommunication network.

3. Radio terminal (10, 30) to be used in a radiocommunication network, said radio terminal (10, 30) comprising means for selecting at least two fixed stations (11, 12, 13, 20) of said network for communicating simultaneously with them, each of said fixed stations (11, 12, 13, 20) comprising means (21) for sending a first broadcast channel (25) at a constant power level,
wherein each of said fixed stations (11, 12, 13, 20) also comprises means (22) for sending a second broadcast channel (26) at a power level depending on the uplink load status of the corresponding fixed station (11, 12, 13, 20), said radio terminal (10, 30) comprising processing means (31 - 34) providing, for each of said fixed stations (11, 12, 13, 20), data related to reception quality levels of each of said broadcast channels (25, 26).

4. Radio terminal according to claim 3, wherein said processing means (31 - 34) cooperate with decision means (35) able to decide with which of said fixed stations (11, 12, 13, 20) said terminal (30, 10) will communicate, on the base of said data related to said reception quality levels.

5. Radio terminal according to any one of the claims 3 and 4, wherein said data related to said reception quality levels are Eb/lo of said broadcast channels (25, 26).

6. Radio terminal according to any one of the claims 3 and 4, wherein said data related to said reception quality levels are power levels.

7. Radio terminal according to any one of the claims 3 to 6, wherein said decision means select at least:
- the fixed station (11, 12, 13, 20) for which said first broadcast channel (25) is the best received by said terminal (30, 10), and
- the fixed station (11, 12, 13, 20) for which said second broadcast (26) channel shows the lowest uplink power budget.

8. Radio network controller (14) communicating with fixed stations (11, 12, 13, 20) of a radiocommunication network, said radio network controller (14) comprising processing means (18) for determining the power of second broadcast channels (26) broadcasted by fixed stations (11, 12, 13, 20) it controls, in function of the uplink power budget of the corresponding fixed stations (11, 12, 13, 20).
